# EUROPÄISCHE PATENTSCHRIFT

(11) **EP 1 269 829 B1**
(45) Veröffentlichungstag und Bekanntmachung des Hinweises auf die Patenterteilung: **28.06.2006**
(21) Anmeldenummer: 02010906.2
(22) Anmeldetag: 16.05.2002
(51) Int. Cl.: A01F 29/20

(54) **Erntemaschine**
Harvester
Récolteuse

(30) Priorität: 29.05.2001 DE 10126280
(43) Veröffentlichungstag der Anmeldung: 02.01.2003
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Radke, Karl-Heinz, Dipl.-Ing., 02681 Wilthen (DE); Strobel, Thomas, Dipl.-Ing., 01833 Stolpen OT Langenwolmsdorf (DE)
(74) Vertreter: Busse & Busse Patentanwälte

(56) Entgegenhaltungen:
- DE-A- 2 209 672
- DE-A- 19 650 058
- DE-A- 19 742 770
- US-A- 4 651 936

## Beschreibung

Die Erfindung bezieht sich auf eine Erntemaschine zum Aufnehmen und Häckseln von Mais, Anwelkgras, Grünfutter und dergleichen Erntegut mit einer in Rotationsbewegung versetzbaren Häckseltrommel, an der über Messerträger, Befestigungsaufnahmen umfassende, nachstellbare Häckselmesser festlegbar sind.

Herkömmliche Feldhäcksler haben eine Häckseltrommel, die mit Häckselmessern ausgerüstet ist, die einen rückwärtigen ebenen Messerbereich haben, der zur Befestigung des jeweiligen Häckselmessers an dem Messerträgern der Häckseltrommel dient. Vor diesem rückwärtigen Bereich ist der Schneidenbereich des Häckselmessers angeordnet, der über die Messerträger der Häckseltrommel hinausragt. Die Befestigung der Häckselmesser erfolgt in der Regel durch eine Vielzahl von Befestigungsschrauben.

Die hohen Belastungen der Häckselmesser verlangen eine sichere Verbindung zwischen allen Teilen der Häckseltrommel. Ein Wandern der Häckselmesser in radialer Richtung kann zum Aufsetzen der Häckselmesser mit der Gefahr der Zerstörung der Häckseltrommel und benachbarter Baugruppen führen. Um diese Verbindung möglichst sicher auszuführen, wird daher eine Vielzahl von Befestigungsschrauben benutzt.

Aufgrund der Arbeitsweise von z. B. als Feldhäcksler ausgebildeten Erntemaschinen unterliegen die Schneidkanten der Häckselmesser einem starken Verschleiß, was zu einem starken Anstieg des Energiebedarfes für das Schneiden des Erntegutes führt. Darüber hinaus können Verunreinigungen wie z. B. Steine als Fremdkörper zu einer Beschädigung der Schneidkante beitragen. Um ordentliche Schnittverhältnisse zu erreichen, sind in den Erntemaschinen üblicherweise daher Messerschärfeinrichtungen. Je nach Einsatzbedingungen kann ein Schärfen der Häckselmesser mehrmals täglich erforderlich sein. Dieses ständige Scharfschleifen führt zwangsläufig zu einer stetigen Verringerung der Schneidkante und damit des Überstandes der Messerschneidkanten über die Messerträger, so daß die Häckslertrommel in ihrem Außendurchmesser kleiner wird. Dies bedingt allerdings eine Vergrößerung des Schneidspaltes mit einem daraus resultierenden erhöhten Schnittenergiebedarf. Daher ist eine Gegenschneide nach jedem Schleifvorgang wieder an die abgeschliffenen Häckselmesser anzustellen. Dieser Vorgang ist aber nur in einem kleinen Bereich möglich. Um die Häckselmesser nicht nach Ausschöpfen der Anstellmöglichkeit der Gegenschneide durch neue ersetzen zu müssen, ist es bekannt, die Häckselmesser mit Langlöchern zu versehen, die nach dem Lockern aller Befestigungsschrauben ein weiteres Verschieben der Häckselmesser in radialer Richtung ermöglicht. Ist auch diese Verstellmöglichkeit ausgeschöpft, müssen die Häckselmesser durch neue ersetzt werden.

Aufgrund der Vielzahl der erforderlichen Schrauben für die Befestigung der Häckselmesser ist dieser Vorgang sehr zeitaufwendig, da die Befestigungsschrauben komplett aus dem Messerträger, den Gewindeleisten oder den Muttern herausgeschraubt werden müssen. Soll die Erntemaschine von einer kurzen auf eine sehr lange Häcksellänge eingestellt werden, ist es erforderlich, daß ein Teil der Häckselmesser von der Häckseltrommel entfernt wird. Auch dieser Vorgang erfordert erhebliche Umrüstzeiten.

Um den Vorgang des Messerwechselns zu vereinfachen, ist es aus der DE 197 42 770 A 1 bekannt, die Befestigungsaufnahmen des Häckselsmessers als nach hinten hin offene Langlöcher, also Schlitze auszubilden. Dies hat zwar den Vorteil, daß die Befestigungsschrauben der Häckselmesser nur kurz gelockert werden müssen, wonach die Häckselmesser aus ihren Befestigungen gezogen werden können. In der Praxis hat sich jedoch diese Ausbildung als außerordentlich risikoreich herausgestellt, da keine Begrenzung des Nachstellweges vorgesehen ist. Dies führte im praktischen Einsatz zwangsläufig zu einem zu weiten Nachstellen des Häckselmessers aus ihren die Häckselmesser gänzlich abdeckenden und somit nicht einsetzlbaren Befestigungs-halterungen, wonach keine sichere Verspannung der Häckselmesser mit den Messerträgern mehr möglich ist. Das dadurch bedingte Risiko, Schäden in der Erntemaschine herbeizuführen, ist erheblich.

Es ist Aufgabe der vorliegenden Erfindung, eine Erntemaschine der eingangs genannten Art zur Verfügung zu stellen, bei der eine sichere Befestigung der Häckselmesser an der Häckseltrommel möglich ist, bei der jedoch gleichwohl Häckselmesser schnell ausgewechselt werden können.

Zur Lösung dieser Aufgabe zeichnet sich die Erntemaschine der eingangs genannten Art durch die im kennzeichnenden Teil des Anspruchs 1 angegebenen Merkmale aus. Weitere Ausgestaltungen und Vorteile der Erfindung sind in den Ansprüchen 2 bis 4 angegeben.

Bei der Erntemaschine nach der Erfindung sind Häckselmesser schnell auszuwechseln, da auch im Großteil der Befestigungselemente wie Schrauben nach dem Ausbau von Messern in der Häckseltrommel verbleiben kann. Gleichwohl kann aufgrund der Begrenzung des Verstellweges durch die Langlöcher ein Häckselmesser nicht über einen festgelegten Bereich nachgestellt werden, so daß ein sichere Befestigung der Häckselmesser an dem Messerträger stets gewährleistet bleibt. Im Falle des Auswechseln des Häckselmessers sind nur die in den Langlöchern befindlichen Befestigungselemente herauszunehmen und die anderen Befestigungselemente jeweils nur zu lockern, so daß das Häckselmesser schnell ausgewechselt werden kann. Zweckmäßigerweise sind die Häckselmesser über Abdeckplatten, die sich im wesentlichen über die Langlöcher und die nach hinten hin offenen Schlitze erstrecken, mit den Messerträgern über Schrauben zu verspannen.

Weitere Vorteile und Ausgestaltung der Erfindung ergeben sich aus der Zeichnung und der nachfolgenden Beschreibung. In der Zeichnung zeigen:
- Fig. 1: in einer schematischen Seitendarstellung eine als selbstfahrender Feldhäcksler ausgebildete Erntemaschine;
- Fig. 2: in einer perspektivischen Darstellung ein Ausführungsbeispiel einer Häckselstrommel, und
- Fig.3: eine Draufsicht auf ein Häckselmesser der Häckseltrommel nach Fig. 2. im demontierten Zustand.

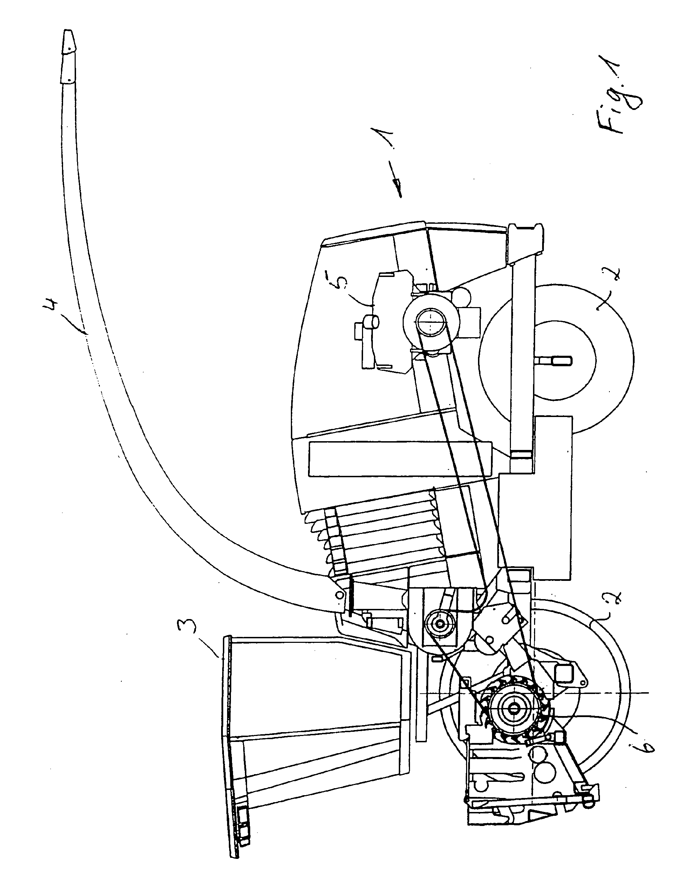

Der in Fig. 1 ganz allgemein dargestellt Feldhäcksler 1 hat Räder 2, eine Kabine 3, ein Auswurfrohr 4 und innerhalb des Gehäuses 6 angeordnete Einheiten wie Antrieb 5, Häckseltrommel 6, Kornkräcker und dergleichen feldhäcksler-typische Aggregate. Der Häckseltrommel 6 vorgeordnet sind im einzelnen nicht näher dargestellte Zuführelemente wie Einzugs- und Vorpresswalzen und Anbaugeräte wie z. B. ein Maisgebiss.

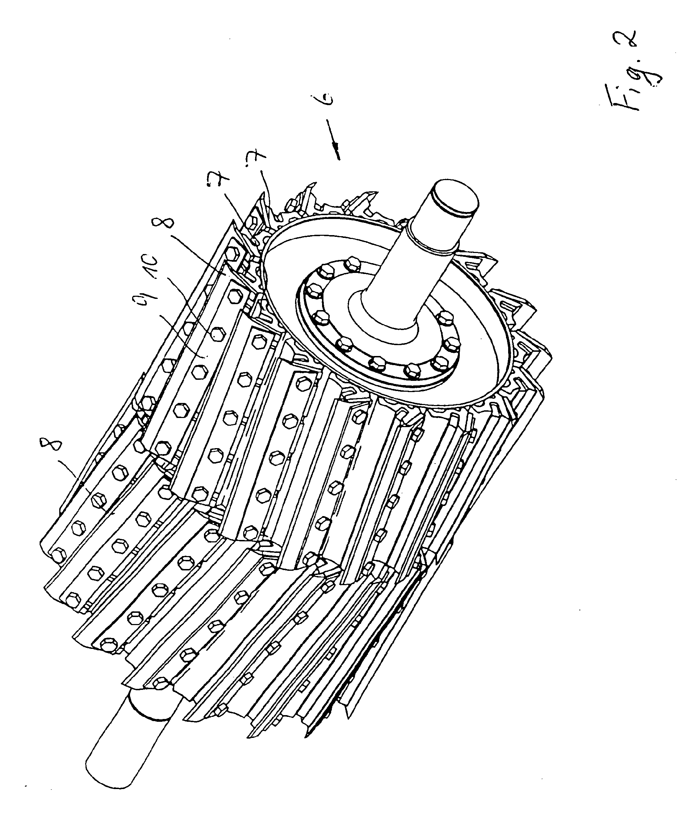

In Fig. 2 ist die Häckseltrommel 6 perspektivisch dargestellt. Die Häckseltrommel 6 hat auf ihrem Trommelmantel zwei nebeneinander angeordnete Reihen von Messerträgern 7, mit denen Häckselmesser 8 über Abdeckplatten 9 und Schrauben 10 verspannt sind. Die Messerträger 7 und damit auch die Häckselmesser 8 haben eine Schrägausrichtung zur Mitte der Häckseltrommel 6 hin und darüber hinaus ein radiales Versatzmaß, so daß die Häckselmesser 8 auf Lücke V-förmig angeordnet sind.

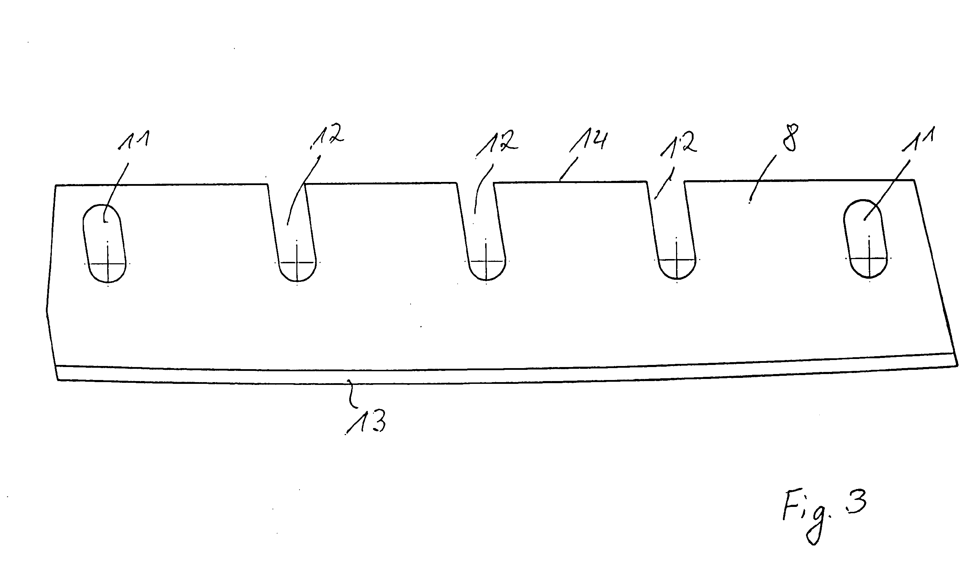

Wie näher aus Fig. 3 hervorgeht, hat jedes Häckselmesser 8 als Befestigungsaufnahmen Langlöcher 11 und Schlitze 12. Die Schlitze 12 sind zu der der Schneidkante 13 gegenüberliegenden rückwärtigen Stirnkante 14 des Häckselmessers 8 hin offen, wohingegen die Langlöcher 11 mit ihren der hinteren Kante 14 zugewandten Begrenzungen einen derartigen Abstand zu dieser hinteren Stirnkante 14 aufweisen, daß auch bei maximaler Nachstellung des Häckselmessers 8, in der das verwendete Befestigungselement, z. B. ein Schraubelement, an der hinteren Begrenzung anliegt, noch ein hinreichender Anlagebereich des Messers an dem Messerträger 7 gegeben ist, um eine ausreichende Befestigung und einen sicheren Halt des Häckselmessers 8 an dem Messerträger 7 vorliegen zu haben.

Soll ein Häckselmesser 8 ausgewechselt werden, sind lediglich die Befestigungselemente, die in den Langlöchern 11 angeordnet sind, zu demontieren. Andere Befestigungselemente, die in den Schlitzen 12 angeordnet sind, sind lediglich zu lockern, wonach ein einzelnes Häckselmesser herausgenommen und gegen ein anderes ersetzt werden kann.

## Patentansprüche

1. Erntemaschine zum Aufnehmen und Häckseln von Mais, Anwelkgras, Grünfutter und dergleichen Erntegut mit einer in Rotationsbewegung versetzbaren Häckseltrommel (6), an der über Messerträger (7), Befestigungsaufnahmen umfassende, nachstellbare Häckselmesser (8) festlegbar sind, **dadurch gekennzeichnet, daß** zumindest zwei der Befestigungsaufnahmen des jeweiligen Häckselmessers (8) als endseitig jeweils eine Begrenzung aufweisende Langlöcher (11) und übrige Befestigungsaufnahmen des Häckselmessers (8) als zu der der Schneidkante (13) gegenüberliegenden, rückwärtigen Stirnkante (14) des Häckselmessers (8) hin offene Schlitze (12) ausgebildet sind.

2. Erntemaschine nach Anspruch 1, **dadurch gekennzeichnet, daß** die als Langlöcher (11) ausgebildeten Befestigungsaufnahmen jeweils in gegenüberliegenden Seitenend-bereichen eines Häckselmessers (8) vorgesehen sind.

3. Erntemaschine nach Anspruch 1 oder 2, **dadurch gekennzeichnet, daß** Langlöcher (11) und Schlitze (12) in Schrägausrichtung zur rückwärtigen Stirnkante (14) vorgesehen sind.

4. Erntemaschine nach einem der Ansprüche 1 bis 3, **dadurch gekennzeichnet, daß** oberhalb von Langlöchern (11) und Schlitzen (12) eine Abdeckplatte (9) vorgesehen ist und daß das Häckselmesser (8) über die Abdeckplatte (9) und Befestigungselemente (10) mit dem zugeordneten Messerträger verspannbar ist.

5. Erntemaschine nach einem der Ansprüche 1 bis 4, **dadurch gekennzeichnet, daß** die Begrenzung des jeweiligen Langloches (11) den Maximalverstellweg eines Häckselmessers (8) begrenzt und als Sicherungsendanschlag ausgebildet ist.

## Claims

1. Harvester for picking up and chopping maize, wilted grass, green forage and similar harvested crops, having a chopping cylinder (6) able to be set in motion in rotation, to which chopping cylinder (6) adjustable chopping blades (8) comprising fastening receptacles can be fixed by means of blade carriers (7), **characterised in that** at least two of the fastening receptacles of the given chopping blade (8) are in the form of elongated holes (11) each having a boundary at an end or ends, and other fastening receptacles of the chopping blade (8) are in the form of slots (12) which are open towards the rear edge-face (14), opposite from the cutting edge (13), of the chopping blade (8).

2. Harvester according to claim 1, **characterised in that** the fastening receptacles which are in the form of elongated holes (11) are provided in respective opposing lateral end-regions of a chopping blade (8).

3. Harvester according to claim 1 or 2, **characterised in that** the elongated holes (11) and slots (12) are provided in an alignment which is inclined to the rear edge-face (14).

4. Harvester according to one of claims 1 to 3, **characterised in that** a cover plate (9) is provided above the elongated holes (11) and slots (12), and **in that** the chopping blade (8) can be clamped to the associated blade carrier by means of the cover plate (9) and fastenings (10).

5. Harvester according to one of claims 1 to 4, **characterised in that** the boundary of the given elongated hole (11) defines the maximum adjusting travel of a chopping blade (8) and forms a safeguarding end-stop.

## Revendications

1. Moissonneuse pour récolter et hacher du maïs, de l'herbe préfanée, du fourrage vert et des récoltes similaires, comportant un tambour de hachage (6) pouvant être mis en rotation, sur lequel des lames de hachage (8) réglables ultérieurement, comportant des logements de fixation, peuvent être fixées par l'intermédiaire de porte-lames (7), **caractérisée en ce qu'**au moins deux des logements de fixation de chaque lame de hachage (8) sont conformés du côté des extrémités en tant que trous oblongs (11) présentant chaque fois une limite et **en ce que** d'autres logements de fixation de la lame de hachage (8) sont conformés en tant que fentes (12) ouvertes en direction du bord frontal arrière (14) de la lame de hachage (8) opposé au tranchant (13).

2. Moissonneuse selon la revendication 1, **caractérisée en ce que** les logements de fixation conformés en tant que trous oblongs (11) sont prévus chaque fois dans des zones d'extrémités latérales opposées d'une lame de hachage (8).

3. Moissonneuse selon la revendication 1 ou 2, **caractérisée en ce que** des trous oblongs (11) et des fentes (12) sont prévus de façon orientée en biais par rapport au bord frontal arrière (14).

4. Moissonneuse selon l'une quelconque des revendications 1 à 3, **caractérisée en ce qu'**une plaque de recouvrement (9) est prévue au-dessus des trous oblongs (11) et des fentes (12) et **en ce que** la lame de hachage (8) peut être serrée sur le porte-lame correspondant par l'intermédiaire de la plaque de recouvrement (9) et d'éléments de fixation (10).

5. Moissonneuse selon l'une quelconque des revendications 1 à 4, **caractérisée en ce que** la limite de chaque trou oblong (11) limite la course de réglage maximale d'une lame de hachage (8) et est conformée en tant que butée de fin de course de sécurité.
